# EUROPEAN PATENT APPLICATION

(11) **EP 4 776 722 A1**
(43) Date of publication of application: **15.07.2026**
(21) Application number: 23952597.5
(22) Date of filing: 20.09.2023
(51) Int. Cl.: H04W 72/12, H04W 48/12

(54) **COMMUNICATION METHOD AND RELATED APPARATUS**

(71) Applicant: HUAWEI TECHNOLOGIES CO., LTD., Shenzhen 518129 (CN)
(72) Inventor: WANG, Ting, Shenzhen, Guangdong 518129 (CN); TANG, Hao, Shenzhen, Guangdong 518129 (CN); GAO, Na, Shenzhen, Guangdong 518129 (CN)
(74) Representative: Thun, Clemens
(86) International application number: PCT/CN2023/120164
(87) International publication number: WO 2025/059937

(57) **Abstract**

This application provides a communication method and a related apparatus, and is applied to the field of communication technologies. In technical solutions provided in this application, a network device sends first-stage control information, where the first-stage control information indicates scheduling information of second-stage control information, the second-stage control information indicates scheduling information of a data channel between each of S transmission reception points TRPs and a terminal device, and S is an integer greater than 1, and sends the second-stage control information. In this application, the network device schedules an M-TRP data channel based on two-stage DCI, so that blind detection complexity of control channels and overheads of control channels can be reduced.

## Description

### TECHNICAL FIELD

This application relates to the communication field, and in particular, to a communication method and a related apparatus.

### BACKGROUND

To achieve massive connectivity, high capacity, ultra-reliable, and low-latency communication, a multi-transmission reception point (multi-transmission reception point, multi-TRP) technology has been introduced in the communication field, to enhance network performance in terms of high reliability, wide coverage, and high capacity through flexible deployment scenarios.

In the multi-TRP technology, single downlink control information (downlink control information, DCI) and multiple pieces of DCI may be supported to implement scheduling of a data channel. For example, for a URLLC service, same data may be transmitted through space division, frequency division, or time division and scheduling using the single DCI. However, regardless of the single DCI or the multiple pieces of DCI, multi-TRP DCI causes high transmission overheads and high blind detection complexity.

### SUMMARY

This application provides a communication method and a related apparatus, to reduce transmission overheads between a network device and a terminal device and reduce blind detection complexity in a multi-TRP scenario.

According to a first aspect, this application provides a communication method. The method is applied to a network device. The method includes: sending first-stage control information, where the first-stage control information indicates scheduling information of second-stage control information, the second-stage control information indicates scheduling information of a data channel between each of S transmission reception points TRPs and a terminal device, and S is an integer greater than 1; and sending the second-stage control information.

In some possible implementations, the network device in the method may be one of the S TRPs.

In some possible implementations, the first-stage control information and/or the second-stage control information may be DCI.

In the method, scheduling of data channels between multiple TRP stations and the terminal device is implemented using two-stage control information, so that blind detection complexity of scheduling information and transmission overheads of scheduling information can be reduced.

In the method, the scheduling information may be carried in a control channel and/or a data channel.

In the method, the scheduling of data channels between the multiple TRP stations and the terminal device is implemented using two-stage control information. It may also be understood that blind detection complexity of scheduling information and transmission overheads of scheduling information can be reduced.

In some possible implementations, the second-stage control information specifically indicates scheduling information of each of M data channels on N carriers, N is a positive integer, M is an integer greater than N, and the data channel between each TRP and the terminal device includes all or a part of the M data channels.

This implementation may be understood as follows: Transmission of the S TRPs is considered as multiple data channels, and an implementation in which two-stage control information indicates multiple data channels in one or more cells is multiplexed to indicate the data channels between the S TRPs and the terminal device, so that implementation complexity can be reduced.

In this implementation, in an example, the data channel is a PUSCH.

In this implementation, in an example, the second-stage control information includes at least one of the following information: M pieces of frequency domain resource information, M pieces of time domain resource information, M1 pieces of transmission configuration indication TCI state information, M hybrid automatic repeat request HARQ process numbers, or M pieces of transmit power control TCP information. M1 is a positive integer less than or equal to M. The M pieces of frequency domain resource information, the M pieces of time domain resource information, the M HARQ process numbers, and the M pieces of TCP information each one-to-one correspond to the M data channels.

When the second-stage control information includes the M1 pieces of TCI state information, in an example, M1 is equal to M, and the M1 pieces of TCI state information one-to-one correspond to the M data channels.

In this implementation, the scheduling information of each data channel is separately indicated, so that independent resource assignment, MCS selection, and the like are implemented in an M-TRP scenario, thereby enhancing link adaptation performance.

When the second-stage control information includes the M1 pieces of TCI state information, as another example, M1 is equal to S, and the M1 pieces of TCI state information one-to-one correspond to the S TRPs. The second-stage control information further includes a quantity of data channels between at least one of the S TRPs and the terminal device.

In this implementation, signaling overheads of the TCI state information are reduced, thereby helping reduce signaling messages of the second-stage control information.

In some possible implementations, the second-stage control information includes at least one of the following information: M pieces of frequency domain resource information, M pieces of time domain resource information, M2 pieces of channel sounding reference signal resource indication SRI information, M3 pieces of preamble information, M4 pieces of phase tracking reference signal PTRS-demodulation reference signal DMRS association information, M HARQ process numbers, or M pieces of TPC information. M2 is a positive integer less than or equal to M, M3 is a positive integer less than or equal to M, and M4 is a positive integer less than or equal to M. The M pieces of frequency domain resource information, the M pieces of time domain resource information, the M HARQ process numbers, and the M pieces of TCP information each one-to-one correspond to the M data channels, the M2 pieces of TCI state information one-to-one correspond to M2 data channels in the M data channels, the M3 pieces of SRI state information one-to-one correspond to M3 data channels in the M data channels, and the M4 pieces of PTRS-DMRS association information one-to-one correspond to M4 data channels in the M data channels.

In this implementation, in an example, the data channel may be a PUSCH.

When the second-stage control information includes the M2 pieces of SRI state information, in an example, M2 is equal to M, and the M2 pieces of SRI state information one-to-one correspond to the M data channels.

In this implementation, the scheduling information of each data channel is separately indicated, so that independent resource assignment, MCS selection, and the like are implemented in an M-TRP scenario, thereby enhancing link adaptation performance.

When the second-stage control information includes the M2 pieces of SRI state information, as another example, M2 is equal to S, and the M2 pieces of SRI state information one-to-one correspond to the S TRPs. The second-stage control information further includes a quantity of data channels between at least one of the S TRPs and the terminal device.

In this implementation, signaling overheads of the TCI state information are reduced, thereby helping reduce signaling messages of the second-stage control information.

In some possible implementations, the second-stage control information specifically indicates scheduling information of a first data channel on a first carrier and a transmission manner of the data channels between the S TRPs and the terminal device based on the scheduling information of the first data channel.

In this implementation, in an example, the scheduling information includes at least one of the following information: a quantity of TCI states, a quantity of DMRS CDM groups, a quantity of repetitions, an MCS table, an RV version, time domain resource assignment information, frequency domain resource assignment information, TPC information, SRI information, preamble information, antenna port information, or PTRS-DMRS association information; and/or the transmission manner includes at least one of the following information: a quantity of enabled TRPs, a resource multiplexing scheme, or a service type.

In this implementation, in an example, the second-stage control information includes the scheduling information, a first part of information in the scheduling information indicates the transmission manner, and the first part of information includes at least one of the following information: a quantity of TCI states, a quantity of DMRS CDM groups, a quantity of repetitions, an MCS table, an RV version, the time domain resource assignment information, or the frequency domain resource assignment information.

In this implementation, in an example, the second-stage control information includes the scheduling information and first indication information, and the first indication information indicates the transmission manner.

In this implementation, in an example, the second-stage control information includes the scheduling information and second indication information, the second indication information indicates a first part of information in the transmission manner, and a second part of information in the scheduling information indicates a second part of information in the transmission manner.

In this implementation, in an example, the scheduling information includes a common information field and a private information field, the common information field includes common information of the data channels between the S TRPs and the terminal device in the transmission manner, and the private information field includes private information of each of the S TRPs in the transmission manner indicated by the first part of information.

In an example, when the transmission manner varies, information included in the common information field and information included in the private information field vary.

According to a second aspect, this application provides a communication method. The method is applied to a terminal device. The method includes: receiving first-stage control information, where the first-stage control information indicates scheduling information of second-stage control information, the second-stage control information indicates scheduling information of a data channel between each of S transmission reception points TRPs and the terminal device, and S is an integer greater than 1; and receiving the second-stage control information.

In some possible implementations, the first-stage control information and/or the second-stage control information may be DCI.

In the method, scheduling of data channels between multiple TRP stations and the terminal device is implemented using two-stage control information, so that blind detection complexity of scheduling information and transmission overheads of scheduling information can be reduced.

In the method, the scheduling information may be carried in a control channel and/or a data channel.

In the method, the scheduling of data channels between the multiple TRP stations and the terminal device is implemented using two-stage control information. It may also be understood that blind detection complexity of scheduling information and transmission overheads of scheduling can be reduced.

In some possible implementations, the second-stage control information specifically indicates scheduling information of each of M data channels on N carriers, N is a positive integer, M is an integer greater than N, and the data channel between each TRP and the terminal device includes all or a part of the M data channels.

This implementation may be understood as follows: Transmission of the S TRPs is considered as multiple data channels, and an implementation in which two-stage control information indicates multiple data channels in one or more cells is multiplexed to indicate the data channels between the S TRPs and the terminal device, so that implementation complexity can be reduced.

In this implementation, in an example, the data channel is a PUSCH.

In this implementation, in an example, the second-stage control information includes at least one of the following information: M pieces of frequency domain resource information, M pieces of time domain resource information, M1 pieces of transmission configuration indication TCI state information, M hybrid automatic repeat request HARQ process numbers, or M pieces of transmit power control TCP information. M1 is a positive integer less than or equal to M. The M pieces of frequency domain resource information, the M pieces of time domain resource information, the M HARQ process numbers, and the M pieces of TCP information each one-to-one correspond to the M data channels.

When the second-stage control information includes the M1 pieces of TCI state information, in an example, M1 is equal to M, and the M1 pieces of TCI state information one-to-one correspond to the M data channels.

In this implementation, the scheduling information of each data channel is separately indicated, so that independent resource assignment, MCS selection, and the like are implemented in an M-TRP scenario, thereby enhancing link adaptation performance.

When the second-stage control information includes the M1 pieces of TCI state information, as another example, M1 is equal to S, and the M1 pieces of TCI state information one-to-one correspond to the S TRPs. The second-stage control information further includes a quantity of data channels between at least one of the S TRPs and the terminal device.

In this implementation, signaling overheads of the TCI state information are reduced, thereby helping reduce signaling messages of the second-stage control information.

In some possible implementations, the second-stage control information includes at least one of the following information: M pieces of frequency domain resource information, M pieces of time domain resource information, M2 pieces of channel sounding reference signal resource indication SRI information, M3 pieces of preamble information, M4 pieces of phase tracking reference signal PTRS-demodulation reference signal DMRS association information, M HARQ process numbers, or M pieces of TPC information. M2 is a positive integer less than or equal to M, M3 is a positive integer less than or equal to M, and M4 is a positive integer less than or equal to M. The M pieces of frequency domain resource information, the M pieces of time domain resource information, the M HARQ process numbers, and the M pieces of TCP information each one-to-one correspond to the M data channels, the M2 pieces of TCI state information one-to-one correspond to M2 data channels in the M data channels, the M3 pieces of SRI state information one-to-one correspond to M3 data channels in the M data channels, and the M4 pieces of PTRS-DMRS association information one-to-one correspond to M4 data channels in the M data channels.

In this implementation, in an example, the data channel may be a PUSCH.

When the second-stage control information includes the M2 pieces of SRI state information, in an example, M2 is equal to M, and the M2 pieces of SRI state information one-to-one correspond to the M data channels.

In this implementation, the scheduling information of each data channel is separately indicated, so that independent resource assignment, MCS selection, and the like are implemented in an M-TRP scenario, thereby enhancing link adaptation performance.

When the second-stage control information includes the M2 pieces of SRI state information, as another example, M2 is equal to S, and the M2 pieces of SRI state information one-to-one correspond to the S TRPs. The second-stage control information further includes a quantity of data channels between at least one of the S TRPs and the terminal device.

In this implementation, signaling overheads of the TCI state information are reduced, thereby helping reduce signaling messages of the second-stage control information.

In some possible implementations, the second-stage control information specifically indicates scheduling information of a first data channel on a first carrier and a transmission manner of the data channels between the S TRPs and the terminal device based on the scheduling information of the first data channel.

In this implementation, in an example, the scheduling information includes at least one of the following information: a quantity of TCI states, a quantity of DMRS CDM groups, a quantity of repetitions, an MCS table, an RV version, time domain resource assignment information, frequency domain resource assignment information, TPC information, SRI information, preamble information, antenna port information, or PTRS-DMRS association information; and/or the transmission manner includes at least one of the following information: a quantity of enabled TRPs, a resource multiplexing scheme, or a service type.

In this implementation, in an example, the second-stage control information includes the scheduling information, a first part of information in the scheduling information indicates the transmission manner, and the first part of information includes at least one of the following information: a quantity of TCI states, a quantity of DMRS CDM groups, a quantity of repetitions, an MCS table, an RV version, the time domain resource assignment information, or the frequency domain resource assignment information.

In this implementation, in an example, the second-stage control information includes the scheduling information and first indication information, and the first indication information indicates the transmission manner.

In this implementation, in an example, the second-stage control information includes the scheduling information and second indication information, the second indication information indicates a first part of information in the transmission manner, and a second part of information in the scheduling information indicates a second part of information in the transmission manner.

In this implementation, in an example, the scheduling information includes a common information field and a private information field, the common information field includes common information of the data channels between the S TRPs and the terminal device in the transmission manner, and the private information field includes private information of each of the S TRPs in the transmission manner indicated by the first part of information.

In an example, when the transmission manner varies, information included in the common information field and information included in the private information field vary.

In the method, after receiving the first-stage control information, the terminal device may receive the second-stage control information based on the first-stage control information. After receiving the second-stage control information, the terminal device may complete transmission of the data channels with the S TRPs based on the second-stage control information.

According to a third aspect, this application provides a communication apparatus. The communication apparatus may include modules that one-to-one correspond to the methods/operations/steps/actions described in the first aspect. The modules may be implemented through a hardware circuit, software, or a combination of a hardware circuit and software.

In a design, the apparatus may include a processing module and a communication module. The communication module is configured to perform a sending action and a reception action that are performed by the network device in the method described in the first aspect, and the processing module is configured to perform processing-related actions that are performed by the network device in the method described in the first aspect.

In a design, the apparatus may be a network device, or may be an apparatus, a module, a circuit, a chip, or the like that is configured and disposed in the network device, or may be an apparatus that can be used in a matching manner with the network device.

According to a fourth aspect, this application provides a communication apparatus. The communication apparatus may include modules that one-to-one correspond to the methods/operations/steps/actions described in the second aspect. The modules may be implemented through a hardware circuit, software, or a combination of a hardware circuit and software.

In a design, the apparatus may include a processing module and a communication module. The communication module is configured to perform a sending action and a reception action that are performed by the terminal device in the method described in the second aspect, and the processing module is configured to perform processing-related actions that are performed by the terminal device in the method described in the first aspect or the second aspect.

In a design, the apparatus may be a terminal device, or may be an apparatus, a module, a circuit, a chip, or the like that is configured and disposed in the terminal device, or may be an apparatus that can be used in a matching manner with the terminal device.

According to a fifth aspect, a communication apparatus is provided, including a processor and a storage medium. The storage medium stores instructions. When the instructions are run by the processor, the method according to any one of the first aspect or the possible implementations of the first aspect is implemented, or the method according to any one of the second aspect or the possible implementations of the second aspect is implemented.

According to a sixth aspect, a communication apparatus is provided, including a processor, where the processor is configured to process data and/or information, so that the method according to any one of the first aspect or the possible implementations of the first aspect is implemented, or the method according to any one of the second aspect or the possible implementations of the second aspect is implemented.

In a design, the apparatus may be a network device, or may be an apparatus, a module, a circuit, a chip, or the like that is configured and disposed in the network device, or may be an apparatus that can be used in a matching manner with the network device.

In a design, the apparatus may be a terminal device, or may be an apparatus, a module, a circuit, a chip, or the like that is configured and disposed in the terminal device, or may be an apparatus that can be used in a matching manner with the terminal device.

Optionally, the apparatus may further include a memory. The memory is configured to store a program or instructions. The processor is configured to run the program or the instructions, so that the method according to any one of the first aspect or the possible implementations of the first aspect is implemented, or the method according to any one of the second aspect or the possible implementations of the second aspect is implemented.

Optionally, the apparatus may further include a transceiver circuit or an input/output interface.

According to a seventh aspect, a chip is provided, including a processor. The processor is configured to run a program or instructions, so that the method according to any one of the first aspect or the possible implementations of the first aspect is implemented, or the method according to any one of the second aspect or the possible implementations of the second aspect is implemented.

Optionally, the chip may further include a memory, and the memory is configured to store the program or the instructions. Optionally, the chip may further include the transceiver circuit or an input/output interface.

According to an eighth aspect, a computer-readable storage medium is provided. The computer-readable storage medium includes instructions. When the instructions are run by a processor, the method according to any one of the first aspect or the possible implementations of the first aspect is implemented, or the method according to any one of the second aspect or the possible implementations of the second aspect is implemented.

According to a ninth aspect, a computer program product is provided. The computer program product includes computer program code or instructions. When the computer program code or the instructions are run, the method according to any one of the first aspect or the possible implementations of the first aspect is implemented, or the method according to any one of the second aspect or the possible implementations of the second aspect is implemented.

According to a tenth aspect, a system is provided. The system includes one or a combination of the following apparatuses: the communication apparatus performing the method according to any one of the first aspect or the possible implementations of the first aspect, or the communication apparatus performing the method according to any one of the second aspect or the possible implementations of the second aspect.

### BRIEF DESCRIPTION OF DRAWINGS

FIG. 1 is a diagram of a communication system to which a method according to an embodiment of this application is applicable;
FIG. 2 is a diagram of another communication system to which a method according to an embodiment of this application is applicable;
FIG. 3 is a diagram of another communication system to which a method according to an embodiment of this application is applicable;
FIG. 4 is a diagram of another communication system to which a method according to an embodiment of this application is applicable;
FIG. 5 is a diagram of an application scenario to which a method according to an embodiment of this application is applicable;
FIG. 6 is a schematic flowchart of a communication method according to an embodiment of this application;
FIG. 7 is a diagram of scheduling PDSCHs of multiple TRPs using two-stage DCI;
FIG. 8 is a diagram of scheduling PUSCHs of multiple TRPs using two-stage DCI;
FIG. 9 is a diagram of a structure of a communication apparatus according to an embodiment of this application; and
FIG. 10 is a diagram of a structure of a communication apparatus according to another embodiment of this application.

### DESCRIPTION OF EMBODIMENTS

The following describes the technical solutions in embodiments of this application with reference to the accompanying drawings in embodiments of this application.

To clearly describe technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference.

It should be noted that, in embodiments of this application, the word "exemplary" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "multiple" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of multiple items (pieces). For example, at least one item (piece) of a, b, or c may indicate: a, b, c, a and b, a and c, b and c, or a, b, and c, where a, b, and c may be singular or plural.

The technical solutions provided in this application may be applied to various communication systems, for example, a fifth generation (5^{th} generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a sixth generation (6^{th} generation, 6G) mobile communication system, or a system integrating multiple systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data, for example, a handheld device or a vehicle-mounted device with a wireless connection function. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

In an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

The terminal device in embodiments of this application may alternatively be replaced with an apparatus that can support the terminal device in implementing the function, for example, a chip system. The apparatus may be installed in the terminal device or used in a matching manner with the terminal device. In embodiments of this application, the chip system may include a chip, or may include a chip and another discrete component. In embodiments of this application, an example in which the apparatus for implementing the function of the terminal device is a terminal device is merely used for description, and constitutes no limitation on the solutions in embodiments of this application.

In embodiments of this application, the network device may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). A specific technology and a specific device form that are used by the network device are not limited in embodiments of this application. In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In embodiments of this application, the network device may be replaced with an apparatus that can support the network device in implementing the function, for example, a chip system, a hardware circuit, a software module, or a hardware circuit plus a software module. The apparatus may be mounted in the network device or used together with the network device. In embodiments of this application, an example in which the apparatus configured to implement the function of the network device is a network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

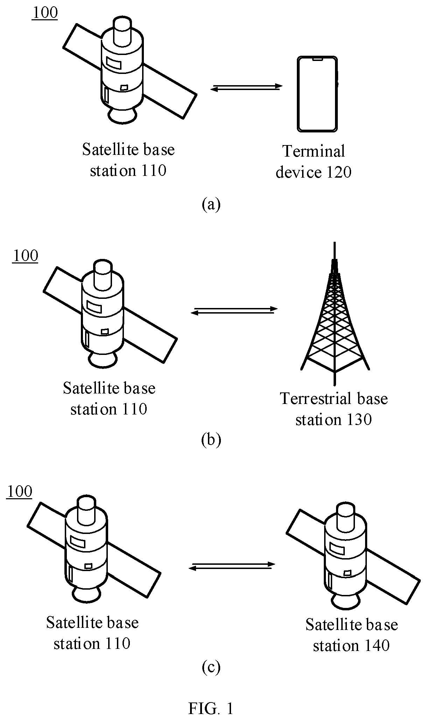

FIG. 1 is a diagram of a communication system to which a method according to an embodiment of this application is applicable. As shown in (a) of FIG. 1, the communication system 100 may include a satellite base station 110 and a terminal device 120. The satellite base station 110 may also be referred to as a network device.

As shown in (b) of FIG. 1, the communication system 100 may include a satellite base station 110 and a terrestrial base station 130. In the system, the satellite base station may also be referred to as a network device, and the terrestrial base station 130 may be understood as a terminal device relative to the satellite base station.

As shown in (c) of FIG. 1, the communication system 100 may include a satellite base station 110 and a satellite base station 140. In the system, the satellite base station 110 may also be referred to as a network device, and the satellite base station 140 may be understood as a terminal device relative to the satellite base station 110.

In an example, the satellite base station provides a communication service for the terminal device. For example, the satellite base station transmits downlink data to the terminal. The downlink data is encoded using channel coding, and channel-coded data is transmitted to the terminal after constellation modulation. The terminal transmits uplink data to the satellite base station. The uplink data may also be encoded using channel coding, and encoded data is transmitted to the satellite base station after constellation modulation.

It should be noted that FIG. 1 is merely a simplified diagram of an example for ease of understanding. A quantity of network devices and a quantity of terminal devices included in the communication system are not limited in embodiments of this application.

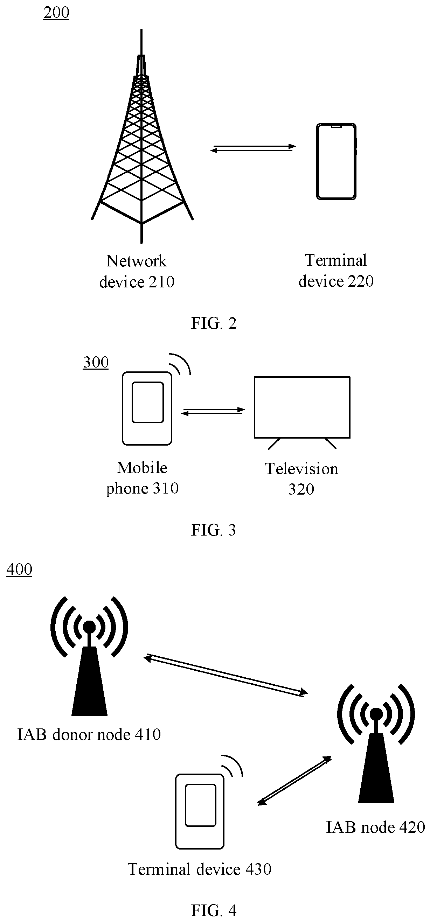

FIG. 2 is a diagram of another communication system to which a method according to an embodiment of this application is applicable. As shown in FIG. 2, the communication system 200 may include at least one network device, for example, a network device 210 shown in FIG. 2. The communication system 200 may further include at least one terminal device, for example, a terminal device 220 shown in FIG. 2. The network device 210 and the terminal device 220 may communicate with each other through a radio link. Communication devices, for example, the network device 210 and the terminal device 220, in the communication system may communicate with each other using a multi-antenna technology.

FIG. 3 is a diagram of another communication system to which a method according to an embodiment of this application is applicable. As shown in FIG. 3, the communication system 300 may include at least one network device, for example, a mobile phone 310 shown in FIG. 3. The communication system 300 may further include at least one terminal device, for example, a television 320 shown in FIG. 3.

FIG. 4 is a diagram of another communication system to which a method according to an embodiment of this application is applicable. As shown in FIG. 4, the communication system 400 may include an IAB donor node 410, an IAB node 420, and a terminal device 430. The IAB donor node communicates with the IAB node through a backhaul link, and the terminal device 430 communicates with the IAB node through an access link.

The method in embodiments of this application may be applied to a multi-TRP application scenario. In an example, the method in embodiments of this application may be applied to a communication scenario in which ultra-reliable low latency communication (ultra-reliable low latency communication, URLLC) is implemented using multiple TRPs, or may be applied to a scenario in which industrial manufacturing is implemented using multiple TRPs.

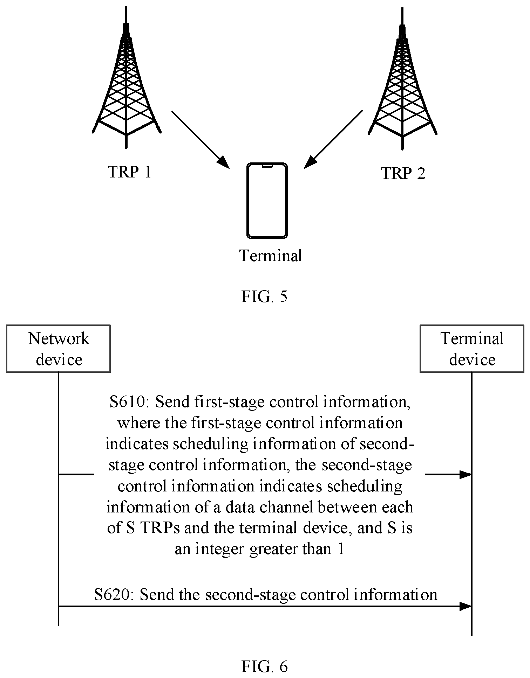

FIG. 5 is a diagram of an application scenario to which a method according to an embodiment of this application is applicable. As shown in FIG. 5, the application scenario is an example of an M-TRP transmission scenario. In this scenario, for example, two TRPs and one terminal device are included. It may be understood that the terminal device is within coverage of the two TRPs, and two different TRPs may provide a network service for the terminal device. The two TRPs are respectively denoted as a TRP 1 and a TPR 2.

The two TRPs may collaboratively send a same data stream, or may send different data streams to a same terminal device. When a same data stream is sent, transmission reliability can be improved, and when different data streams are sent, transmission effectiveness can be improved.

FIG. 6 is a schematic flowchart of a communication method according to an embodiment of this application. As shown in FIG. 6, the method may include S610 and S620.

S610: A network device sends first-stage control information to a terminal device, where the first-stage control information indicates scheduling information of second-stage control information, the second-stage control information indicates scheduling information of a data channel between each of S TRPs and the terminal device, and S is an integer greater than 1. Correspondingly, the terminal device receives the first-stage control information from the network device.

It may be understood that the network device may be a network device that currently provides a cell service for the terminal device, and the terminal device is a terminal device within coverage of the cell service provided by the network device.

It may be understood that the network device may send the first-stage control information to all terminal devices within the coverage.

In an example, the network device may be at least two of the S TRPs.

In an example, the first-stage control information may be 1^{st} DCI.

In an example, the second-stage control information may be 2^{nd} DCI.

In an example, the scheduling information of the second-stage control information may include at least one of the following information: a time domain resource, a frequency domain resource, a modulation and coding scheme (modulation and coding scheme, MCS), and the like.

In an example, the data channel between the TRP and the terminal device may include a PDSCH and/or a PUSCH.

In an example, when the data channel between the TRP and the terminal device is the PDSCH, the scheduling information of the data channel may include at least one of the following information: frequency domain resource information, time domain resource information, transmission configuration indication (transmission configuration indication, TCI) state information, a hybrid automatic repeat request (hybrid automatic repeat request, HARQ) process number, or transmit power control (transmit power control, TCP) information.

In an example, when the data channel between the TRP and the terminal device is the PUSCH, the scheduling information of the data channel may include at least one of the following information: a quantity of channel sounding reference signal resource indication (signal resource indication, SRI) states, a quantity of demodulation reference signal (demodulation reference signal, DMRS) CDM groups, a quantity of repetitions, an MCS table, redundancy version (redundancy version, RV) information, time domain resource assignment information, frequency domain resource assignment information, TPC information, scheduling request indication (scheduling request indication, SRI) information, preamble information, antenna port information, or phase tracking reference signal (phase tracking reference signal, PTRS)-DMRS association information.

In an example, the first-stage control information may be carried in the PDCCH.

In an example, the S TRPs may be all or a part of TRPs in coordinated multi-TRP transmission.

In another example, the S TRPs may include all or a part of TRPs in coordinated multi-TRP transmission and one or more TRPs other than the multiple TRPs.

In an example, the terminal device may receive the first-stage control information in a blind detection manner.

In an example, a data channel between a TRP of the S TRPs and the terminal device may be used for enhanced mobile broadband (enhanced mobile broadband, eMBB) service data and/or URLLC service data.

S620: The network device sends the second-stage control information to the terminal device. Correspondingly, the terminal device receives the second-stage control information from the network device.

In the method, after receiving the first-stage control information, the terminal device may receive the second-stage control information based on the first-stage control information.

In an example, the second-stage control information may be carried in the PDSCH.

In the method, after receiving the second-stage control information, the terminal device may learn of the scheduling information of the data channel between each of the S TRPs and the terminal device, so that data on the data channel can be received based on the scheduling information, thereby implementing data transmission.

In the method, scheduling of data channels between multiple TRP stations and the terminal device is implemented using two-stage control information, so that blind detection complexity of scheduling information and transmission overheads of scheduling information can be reduced.

In the method, the scheduling information may be carried in a control channel and/or a data channel.

In the method, the scheduling of data channels between the multiple TRP stations and the terminal device is implemented using two-stage control information. It may also be understood that blind detection complexity of scheduling information and transmission overheads of scheduling information can be reduced.

In some implementations of embodiments of this application, that the first-stage control information indicates the scheduling information of the second-stage control information may include: The second-stage control information specifically indicates scheduling information of each of M data channels on N carriers, N is a positive integer, M is an integer greater than N, and the data channels between the S TRPs and the terminal device include all or a part of the M data channels.

In this implementation, it may be understood that the multiple TRPs are considered as multiple data channels on one or more carriers, or different TRPs are considered as different data channels.

For example, for downlink scheduling, the multiple TRPs are considered as multiple PDSCHs, or different TRPs are considered as different PDSCHs.

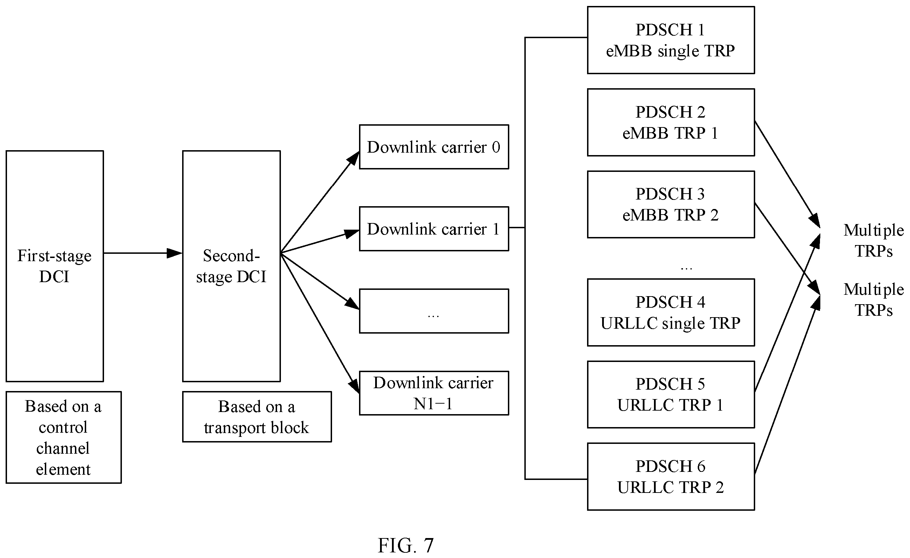

FIG. 7 is a diagram of scheduling PDSCHs of multiple TRPs using two-stage DCI. As shown in FIG. 7, first-stage DCI schedules second-stage DCI. In an example, the first-stage DCI may schedule the second-stage DCI based on a control channel element (control channel element, CCE).

Still as shown in FIG. 7, the second-stage DCI indicates scheduling information of a channel on one or more carriers. In an example, the second-stage DCI may schedule the scheduling information of the channel on the one or more carriers based on a transport block (transport block, TB).

As shown in FIG. 7, the second-stage DCI indicates scheduling information of multiple PDSCHs on a carrier 1. In the multiple PDSCHs, a PDSCH denoted as a PDSCH 1 is a single-TRP PDSCH, and may be used to transmit eMBB service data. A PDSCH denoted as a PDSCH 2 is a TRP denoted as a TRP 1 in multi-TRP transmission, and may be used to transmit eMBB service data. A PDSCH denoted as a PDSCH 3 is a TRP denoted as a TRP 2 in multi-TRP transmission, and may be used to transmit eMBB service data. A PDSCH denoted as a PDSCH 4 is a single-TRP PDSCH, and may be used to transmit URLLC service data. A PDSCH denoted as a PDSCH 5 is a TRP denoted as a TRP 1 in multi-TRP transmission, and may be used to transmit URLLC service data. A PDSCH denoted as a PDSCH 6 is a TRP denoted as a TRP 2 in multi-TRP transmission, and may be used to transmit URLLC service data.

In this example, the PDSCH 2 and the PDSCH 5 may be collectively referred to as multi-TRP transmission, and the PDSCH 3 and the PDSCH 6 may be collectively referred to as multi-TRP transmission.

In FIG. 7, in an example, a single TRP corresponding to the PDSCH 1 may be the TRP 1, and/or a single TRP corresponding to the PDSCH 4 may be the TRP 2. In this example, the PDSCH 1, the PDSCH 2, and the PDSCH 5 may be referred to as multiple PDSCH transmissions of the TRP 1, and the PDSCH 3, the PDSCH 4, and the PDSCH 6 may be referred to as multiple PDSCH transmissions of the TRP 2.

In this implementation, when the second-stage control information indicates scheduling information of each of the M data channels on the N carriers, in an example, the second-stage control information may include at least one of the following information: M pieces of frequency domain resource information, M pieces of time domain resource information, M1 pieces of TCI state information, M HARQ process numbers, or M pieces of TCP information. M1 is a positive integer less than or equal to M. The M pieces of frequency domain resource information, the M pieces of time domain resource information, the M HARQ process numbers, and the M pieces of TCP information are each one-to-one correspond to the M data channels.

It may be understood that N is a quantity of available carriers. Actually, N1 carriers of the N carriers are used, or, the M data channels are carried only on the N1 carriers of the N carriers. For example, the second-stage control information specifically indicates that the N1 carriers are used in the N carriers, and a set of carriers in which the M data channels are located is the N1 carriers.

That the M pieces of frequency domain resource information one-to-one correspond to the M data channels may be understood as follows: Each of the M pieces of frequency domain resource information is frequency domain resource information of a corresponding data channel, and indicates a frequency domain resource occupied by the corresponding data channel.

That the M pieces of time domain resource information one-to-one correspond to the M data channels may be understood as follows: Each of the M pieces of time domain resource information is time domain resource information of a corresponding data channel, and indicates a time domain resource occupied by the corresponding data channel.

That the M HARQ process numbers one-to-one correspond to the M data channels may be understood as follows: Each of the M HARQ process numbers is a HARQ process number of a corresponding data channel, and indicates a number of a HARQ process occupied by the corresponding data channel.

That the M pieces of TCP information one-to-one correspond to the M data channels may be understood as follows: Each of the M pieces of TCP information is TCP information of a corresponding data channel, and indicates TCP information of the corresponding data channel.

The second-stage control information includes at least one of the following information: M pieces of frequency domain resource information, M pieces of time domain resource information, M1 pieces of TCI state information, M HARQ process numbers, or M pieces of TCP information. When the M pieces of frequency domain resource information, the M pieces of time domain resource information, the M HARQ process numbers, and the M pieces of TCP information each one-to-one correspond to the M data channels, the terminal device may determine the scheduling information of each of M data channels based on the information.

In an example, M1 may be equal to M. In this case, the M1 pieces of TCI state information one-to-one correspond to the M data channels, that is, each of the M1 pieces of TCI state information is TCI state information of a time-frequency resource of a corresponding data channel, and indicates a TCI state of the time-frequency resource of the corresponding data channel.

In this example, the terminal device may learn of TCI state information of each data channel based on the M1 pieces of TCI state information.

In an implementation in which the second-stage control information indicates the scheduling information of each of the M data channels on the N carriers, in an M-TRP (multi-TRP) scenario, technical effects such as independent resource assignment and independent MCS selection of a data channel of a TRP can be implemented, and link adaptation performance can be improved.

As another example, M1 may be equal to S. In this case, the M1 pieces of TCI state information one-to-one correspond to the S TRPs. That is, each of the M1 pieces of TCI state information is TCI state information of a data channel of a corresponding TRP, and indicates a TCI state of the data channel of the corresponding TRP. This can reduce signaling overheads.

For example, when S is equal to 2 or in other words, when two TPRs perform coordinated transmission, the second-stage control information may include only two pieces of TCI state information.

In this example, optionally, the second-stage control information may further include a quantity of data channels from each TRP in the M data channels.

In an example, assuming that the second-stage control information indicates scheduling information of M PDSCHs in a cell, log₂ M bits may be used to indicate that T PDSCHs are PDSCHs of the TRP 1. In this way, the terminal device may determine that T PDSCHs of the M PDSCHs are PDSCHs of the TRP 1 and M-T PDSCHs are PDSCHs of the TRP 2. In this example, the second-stage control information may need to indicate only one or two pieces of TCI state information.

When the second-stage control information indicates two pieces of TCI state information, the terminal device may determine that the first T PDSCHs correspond to the first piece of TCI state information, and the last M-T PDSCHs correspond to the second piece of TCI state information.

Further, the terminal device may determine TCI state information corresponding to a time-frequency resource of each PDSCH, and accordingly may receive the PDSCH on a corresponding resource using the corresponding TCI state information.

In an example, HARQ process numbers of any two PDSCHs may be the same or may be different. When the HARQ process numbers of the two PDSCHs are the same, the terminal device may determine that the two PDSCHs transmit same data.

In an example, the two PDSCHs use a multi-TRP repeated transmission scheme. For example, during multi-TRP transmission of URLLC, the two PDSCHs transmit same data. This example can improve data transmission reliability.

When the HARQ process numbers of the two PDSCHs are different, the terminal device may determine that the two PDSCHs transmit different data. If the two PDSCHs have different TCI state information, the terminal device may determine that a multi-TRP capacity improvement solution is used for the two PDSCHs. For example, the terminal device may determine that the two PDSCHs use eMBB multi-TRP transmission.

When multiple PDSCHs of multiple TRPs are considered as multiple PDSCHs on one carrier and the second-stage control information is DCI, an example of information fields in the second-stage control information is shown in Table 1.

**Table 1: Description table of information fields in second-stage DCI of a PDSCH**

| Information field (Field) | Note (Note) |
|---|---|
| Identifier for DCI formats (Identifier for DCI formats) | None |
| Scheduled carrier indicator (Scheduled DL carrier indicator) | N-bit bitmap (N-bit bitmap), indicating N1 scheduled carriers, where N1 is a positive integer less than or equal to N. |
| PDSCH quantity indicator per carrier (Multi-PDSCH indicator) | For an i^{th} carrier in the N1 scheduled carriers, indicating a quantity of scheduled PDSCHs, for example, indicating that the quantity of scheduled PDSCHs is M_i, where i is a positive integer less than or equal to N1. |
| | For example, for the i^{th} carrier, N2 bits are used to indicate M_i scheduled PDSCHs. |
| | For example, M_i PDSCHs are from the TRP 1. |
| | For example, M_i1 PDSCHs are from the TRP 1, M_i2 PDSCHs are from the TRP 2, and M_i1 + M_i2 = M_i. |
| PDSCH quantity indicator corresponding to each TRP (TRP indicator) | Used to indicate a quantity of PDSCHs corresponding to each TRP. For example, M_i1 PDSCHs in M_i correspond to the TRP 1, and M_i2 PDSCHs in M_i correspond to the TRP 2. |
| Bandwidth part indicator (Bandwidth part indicator) | Including N1 blocks, where the N1 blocks one-to-one correspond to the N1 scheduled carriers, and each block indicates a bandwidth part of a corresponding carrier. |
| Frequency domain resource assignment indication (Frequency domain resource assignment) | Including N1 blocks, where the N1 blocks one-to-one correspond to N1 scheduled carriers, and each block includes frequency domain resource information of each PDSCH in a corresponding carrier. |
| | For example, one block includes M_i pieces of frequency domain resource indication information, the M_i pieces of indication information one-to-one correspond to M_i PDSCHs on a carrier corresponding to the block, and each of the M_i pieces of indication information indicates a frequency domain resource corresponding to the PDSCH. |
| | Optionally, in the M_i pieces of indication information, the first M_i1 pieces correspond to the TRP 1, the last M_i2 pieces correspond to the TRP 2, and M_i1 + M_i2 = M. |
| Time domain resource assignment indication (Time domain resource assignment) | Including N1 blocks, where the N1 blocks one-to-one correspond to the N1 scheduled carriers, and each block includes time domain resource information of each PDSCH in a corresponding carrier, or |
| | or a piece of joint indication information. |
| | For example, one block includes M_i pieces of indication information, the M_i pieces of indication information one-to-one correspond to M_i PDSCHs on a carrier corresponding to the block, and each of the M_i pieces of indication information indicates a time domain resource corresponding to the PDSCH. Optionally, in the M_i pieces of indication information, the first M_i1 pieces correspond to the TRP 1, the last M_i2 pieces correspond to the TRP 2, and M_i1 + M_i2 = M. |
| ... | ... |
| Transport block number indicator (TB number indicator) | For the N1 scheduled carriers, the number of TBs in each carrier is indicated. |
| | For example, N1 blocks are included. The N1 blocks one-to-one correspond to the N1 carriers. Each block includes 1 bit. |
| Modulation and coding scheme of TB 1 (Modulation and coding scheme) | Including N1 blocks, where the N1 blocks one-to-one correspond to N1 carriers, each block indicates a modulation and coding scheme of TB1 in a corresponding carrier, and TB1 is a TB in the carrier. |
| New data indicator of TB1 (New data indicator) | Including N1 blocks, where the N1 blocks one-to-one correspond to N1 carriers, each block indicates a TB1 new data indicator in a corresponding carrier, and TB1 is a TB in the carrier. |
| Redundancy version of TB 1 (Redundancy version) | Including N1 blocks, where the N1 blocks one-to-one correspond to N1 carriers, each block indicates a TB1 redundancy version in a corresponding carrier, and TB1 is a TB in the carrier. |
| Modulation and coding scheme of TB2 (Modulation and coding scheme) | Including N1 blocks, where the N1 blocks one-to-one correspond to N1 carriers, each block indicates a modulation and coding scheme of TB2 in a corresponding carrier, and TB2 is another TB in the carrier. |
| | It may be understood that if only one transport block is scheduled on one carrier, a block corresponding to the carrier in the N1 blocks includes 0 bits. |
| New data indicator of TB2 (New data indicator) | Including N1 blocks, where the N1 blocks one-to-one correspond to N1 carriers, each block indicates a new data indicator of TB2 in a corresponding carrier, and TB2 is another TB in the carrier. |
| | It may be understood that if only one transport block is scheduled on one carrier, a block corresponding to the carrier in the N1 blocks includes 0 bits. |
| Redundancy version of TB2 (Redundancy version) | Including N1 blocks, where the N1 blocks one-to-one correspond to N1 carriers, each block indicates a redundancy version of TB2 in a corresponding carrier, and TB2 is another TB in the carrier. |
| | It may be understood that if only one transport block is scheduled on one carrier, a block corresponding to the carrier in the N1 blocks includes 0 bits. |
| HARQ process number (HARQ process number) | Including N1 blocks, where the N1 blocks one-to-one correspond to N1 carriers, each block indicates a modulation and coding scheme of TB2 in a corresponding carrier, and TB2 is another TB in the carrier. |
| | It may be understood that if only one transport block is scheduled on one carrier, a block corresponding to the carrier in the N1 blocks includes 0 bits. |
| Antenna ports (Antenna ports) | N1 blocks are included. The N1 blocks one-to-one correspond to N1 carriers. |
| TCI state indication (Transmission configuration indication) | In an example, N1 blocks are included, where the N1 blocks one-to-one correspond to N1 carriers, an i^{th} block includes M_i pieces of indication information, the M_i pieces of indication information one-to-one correspond to M_i PDSCHs in a carrier corresponding to the block, and each piece of indication information indicates a TCI state of a corresponding PDSCH. However, overheads in this manner are relatively high. |
| | In another example, N1 blocks are included, where the N1 blocks one-to-one correspond to N1 carriers, and a quantity of pieces of indication information included in an i^{th} block is the same as a quantity of TRPs. For example, if one carrier corresponds to only one TPR, a corresponding block includes one piece of indication information. If one carrier corresponds to two TRPs, a corresponding block includes two pieces of indication information. |

In this implementation, a technical solution of control information of PDSCHs of multiple TRPs in two-stage DCI is provided, so that flexible dynamic switching between a single-TRP transmission scheme and a multi-TRP transmission scheme can be implemented while blind detection complexity of control channels and overheads of control channels are reduced, and flexible scheduling of multiple TRPs based on different requirements of different services can be implemented, thereby improving communication performance.

For another example, for uplink scheduling, multiple TRPs are considered as multiple PUSCHs, or in other words, different TRPs are considered as different PUSCHs.

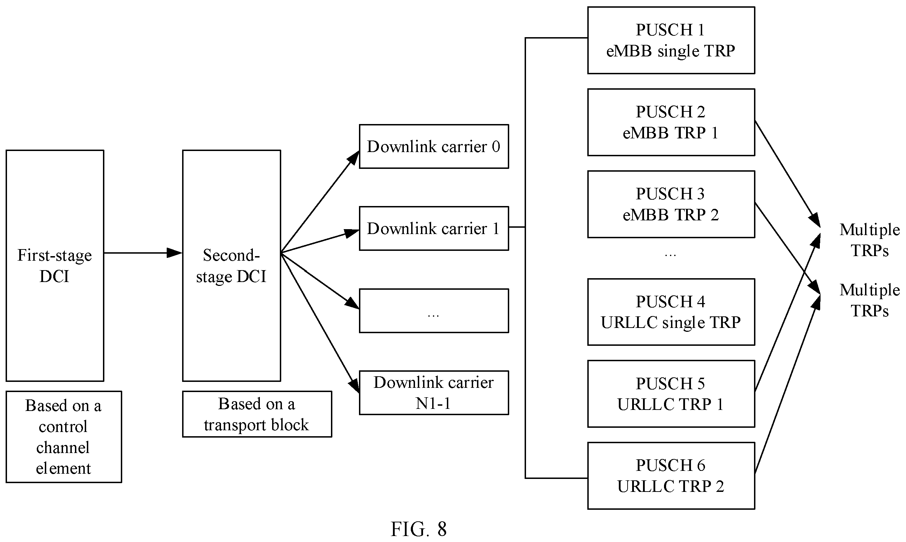

FIG. 8 is a diagram of scheduling PUSCHs of multiple TRPs using two-stage DCI. As shown in FIG. 8, first-stage DCI schedules second-stage DCI. In an example, the first-stage DCI is carried in a control channel, and the second-stage DCI is carried in a downlink data channel.

As also shown in FIG. 8, the second-stage DCI indicates scheduling information of a channel on one or more carriers. In an example, the second-stage DCI may schedule the scheduling information of the channel on the one or more carriers based on a TB.

As shown in FIG. 8, the second-stage DCI indicates scheduling information of multiple PUSCHs on a carrier 1. In the multiple PUSCHs, a PUSCH denoted as a PUSCH 1 is a single-TRP PUSCH, and may be used to transmit eMBB service data. A PUSCH denoted as a PUSCH 2 is a TRP denoted as a TRP 1 in multi-TRP transmission, and may be used to transmit eMBB service data. A PUSCH denoted as a PUSCH 3 is a TRP denoted as a TRP 2 in multi-TRP transmission, and may be used to transmit eMBB service data. A PUSCH denoted as a PUSCH 4 is a single-TRP PUSCH, and may be used to transmit URLLC service data. A PUSCH denoted as a PUSCH 5 is a TRP denoted as a TRP 1 in multi-TRP transmission, and may be used to transmit URLLC service data. A PUSCH denoted as a PUSCH 6 is a TRP denoted as a TRP 2 in multi-TRP transmission, and may be used to transmit URLLC service data.

In this example, the PUSCH 2 and the PUSCH 5 may be combined as a multi-TRP transmission, and the PUSCH 3 and the PUSCH 6 may be combined as a multi-TRP transmission.

In FIG. 8, in an example, a single TRP corresponding to the PUSCH 1 may be the TRP 1, and/or a single TRP corresponding to the PUSCH 4 may be the TRP 2. In this example, the PUSCH 1, the PUSCH 2, and the PUSCH 5 may be referred to as multiple PUSCH transmissions of the TRP 1, and the PUSCH 3, the PUSCH 4, and the PUSCH 6 may be referred to as multiple PUSCH transmissions of the TRP 2.

In an example, it is assumed that a cell has M scheduled PUSCHs, and different TRPs are considered as different scheduled PUSCHs. The second-stage control information may include scheduling information of the M PUSCHs. The scheduling information of the M PUSCHs may respectively indicate at least one of the following information: M pieces of frequency domain resource information, M pieces of time domain resource information, M2 pieces of SRI information, M3 pieces of preamble information (precoding information), M4 pieces of PTRS-DMRS association information, M HARQ process numbers, or M pieces of TPC information.

In an example, M2, M3, and M4 may be equal to M. In this way, independent resource assignment and MCS selection can be implemented in the M-TRP scenario, and link adaptation performance is improved.

As another example, at least one of M2, M3, and M4 may be less than M, for example, equal to S. For example, the second-stage control information may include one or two pieces of SRI information, one or two pieces of preamble information, and/or one or two pieces of PTRS-DMRS association information. This can reduce signaling overheads.

In this example, optionally, the second-stage control information may further indicate a quantity of PUSCHs of each TRP.

In an example, assuming that a total of M PUSCHs are scheduled in one cell, log₂ M bits may be used to indicate that K PUSCHs are PUSCHs of the TRP 1. In this case, the terminal device may determine that the K PUSCHs are PUSCHs of the TRP 1 and that M-K PUSCHs are PUSCHs of the TRP 2.

In this case, for one cell, only one or two pieces of SRI information may need to be indicated.

When two pieces of SRI information is indicated, the terminal device may determine that the first K PUSCHs correspond to the first piece of SRI information, and the last M-K PUSCHs correspond to the second piece of SRI information.

Further, the terminal device may determine SRI information corresponding to a time-frequency resource of each PUSCH, and send the PUSCH on the corresponding resource using the corresponding SRI.

In an example, HARQ process numbers of any two PUSCHs may be the same or may be different. When the HARQ process numbers of the two PUSCHs are the same, the terminal device may determine that the two PUSCHs transmit same data.

In an example, the two PUSCHs use a multi-TRP repeated transmission scheme. For example, during multi-TRP transmission of URLLC, the two PUSCHs transmit same data. This example can improve data transmission reliability.

When the HARQ process numbers of the two PUSCHs are different, the terminal device may determine that the two PUSCHs transmit different data. If the two PUSCHs have different TCI state information, the terminal device may determine that a multi-TRP capacity improvement solution is used for the two PUSCHs. For example, the terminal device may determine that the two PUSCHs use eMBB multi-TRP transmission.

When multiple PUSCHs of multiple TRPs are considered as multiple PUSCHs on one carrier and the second-stage control information is DCI, an example of information fields in the second-stage control information is shown in Table 2.

**Table 2: Description table of information fields in second-stage DCI of a PUSCH**

| Information field (Field) | Note (Note) |
|---|---|
| Identifier for DCI formats (Identifier for DCI formats) | None |
| Scheduled carrier indicator (Scheduled UL carrier indicator) | N-bit bitmap (N-bit bitmap), indicating N1 scheduled carriers, where N1 is a positive integer less than or equal to N. |
| PUSCH quantity indicator per carrier (Multi-PUSCH indicator) | For an i^{th} carrier in the N1 scheduled carriers, indicating a quantity of scheduled PUSCHs, for example, indicating that the quantity of scheduled PDSCHs is M_i, where i is a positive integer less than or equal to N1. |
| | For example, for each carrier, N2 bits are used to indicate M_i scheduled PUSCHs. |
| PUSCH quantity indicator corresponding to each TRP (TRP indicator) | Used to indicate a quantity of PUSCHs corresponding to each TRP (M_i1: M_i1 from the TRP 1; M_i2: M_i2 from the TRP 2). |
| Bandwidth part indicator (Bandwidth part indicator) | Including N1 blocks, where the N1 blocks one-to-one correspond to the N1 scheduled carriers, and each block indicates a bandwidth part indicator of a corresponding carrier. |
| Frequency domain resource assignment indication (Frequency domain resource assignment) | Including N1 blocks, where the N1 blocks one-to-one correspond to N1 scheduled carriers, and each block includes frequency domain resource information of each PUSCH in a corresponding carrier. |
| | For example, one block includes M_i pieces of frequency domain resource indication information, the M_i pieces of indication information one-to-one correspond to M_i PUSCHs on a carrier corresponding to the block, and each of the M_i pieces of indication information indicates a frequency domain resource corresponding to the PUSCH. |
| | Optionally, in the M_i pieces of indication information, the first M_i1 pieces correspond to the TRP 1, the last M_i2 pieces correspond to the TRP 2, and M_i1 + M_i2 = M. |
| Time domain resource assignment indication (Time domain resource assignment) | Including N1 blocks, where the N1 blocks one-to-one correspond to the N1 scheduled carriers, and each block includes time domain resource information of each PDSCH in a corresponding carrier. |
| | For example, one block includes M_i pieces of indication information, the M_i pieces of indication information one-to-one correspond to M_i PDSCHs on a carrier corresponding to the block, and each of the M_i pieces of indication information indicates a time domain resource corresponding to the PDSCH. |
| | Optionally, in the M_i pieces of indication information, the first M_i1 pieces correspond to the TRP 1, the last M_i2 pieces correspond to the TRP 2, and M_i1 + M_i2 = M. |
| Frequency hopping flag Frequency hopping flag | None |
| Modulation and coding scheme (Modulation and coding scheme) | Including N1 blocks, where the N1 blocks one-to-one correspond to N1 carriers, an i^{th} block includes M_i pieces of indication information, the M_i pieces of indication information one-to-one correspond to M_i PUSCHs on a corresponding carrier, and each piece of indication information indicates a modulation and coding scheme of a corresponding PUSCH. |
| New data indicator (New data indicator) | Including N1 blocks, where the N1 blocks one-to-one correspond to N1 carriers, an i^{th} block includes M_i pieces of indication information, the M_i pieces of indication information one-to-one correspond to M_i PUSCHs on a corresponding carrier, and each piece of indication information is a new data indicator of a corresponding PUSCH. |
| Redundancy version (Redundancy version) | Including N1 blocks, where the N1 blocks one-to-one correspond to N1 carriers, an i^{th} block includes M_i pieces of indication information, the M_i pieces of indication information one-to-one correspond to M_i PUSCHs on a corresponding carrier, and each piece of indication information indicates a redundancy version of a corresponding PUSCH. |
| HARQ process number (HARQ process number) | Including N1 blocks, where the N1 blocks one-to-one correspond to N1 carriers, an i^{th} block includes M_i pieces of indication information, the M_i pieces of indication information one-to-one correspond to M_i PUSCHs on a corresponding carrier, and each piece of indication information indicates a HARQ process number of a corresponding PUSCH. |
| TPC command for scheduled PUSCH (TPC command for scheduled PUSCH) | N1 blocks |
| SRS resource set indicator (SRS resource set indicator)/ SRS resource indicator (SRS resource indicator) | In an example, N1 blocks are included, where the N1 blocks one-to-one correspond to N1 carriers, an i^{th} block includes M_i pieces of indication information, the M_i pieces of indication information one-to-one correspond to M_i PUSCHs in a carrier corresponding to the block, and each piece of indication information indicates an SRS resource or an SRS resource set of a corresponding PUSCH. However, overheads in this manner are relatively high. |
| | In another example, N1 blocks are included, where the N1 blocks one-to-one correspond to N1 carriers, and a quantity of pieces of indication information included in an i^{th} block is the same as a quantity of TRPs. For example, if one carrier corresponds to only one TRP, a corresponding block includes one piece of indication information, and the indication information indicates an SRS resource or an SRS resource set of a PUSCH of a corresponding TRP. If one carrier corresponds to two TRPs, a corresponding block includes two pieces of indication information, and the two pieces of indication information indicate SRS resources or SRS resource sets of PUSCHs of corresponding TRPs, respectively. |
| Precoding information and the number of layers (Precoding information and number of layers) | Including N1 blocks, where the N1 blocks one-to-one correspond to N1 carriers, an i^{th} block includes M_i pieces of indication information, the M_i pieces of indication information one-to-one correspond to M_i PUSCHs on a corresponding carrier, and each piece of indication information indicates precoding information and the number of layers of a corresponding PUSCH. |
| Antenna ports (Antenna ports) | In an example, N1 blocks are included, where the N1 blocks one-to-one correspond to N1 carriers, an i^{th} block includes M_i pieces of indication information, the M_i pieces of indication information one-to-one correspond to M_i PUSCHs in a carrier corresponding to the block, and each piece of indication information indicates an antenna port of a corresponding PUSCH. However, overheads in this manner are relatively high. |
| | In another example, N1 blocks are included, where the N1 blocks one-to-one correspond to N1 carriers, and a quantity of pieces of indication information included in an i^{th} block is the same as a quantity of TRPs. For example, if one carrier corresponds to only one TRP, a corresponding block includes one piece of indication information, and the indication information indicates an antenna port of a PUSCH of a corresponding TRP. If one carrier corresponds to two TRPs, a corresponding block includes two pieces of indication information, and the two pieces of indication information indicate an antenna port of PUSCHs of corresponding TRPs, respectively. |
| PTRS-DMRS association (association) | In an example, N1 blocks are included, where the N1 blocks one-to-one correspond to N1 carriers, an i^{th} block includes M_i pieces of indication information, the M_i pieces of indication information one-to-one correspond to M_i PUSCHs in a carrier corresponding to the block, and each piece of indication information indicates a PTRS-DMRS association of a corresponding PUSCH. However, overheads in this manner are relatively high. |
| | In another example, N1 blocks are included, where the N1 blocks one-to-one correspond to N1 carriers, and a quantity of pieces of indication information included in an i^{th} block is the same as a quantity of TRPs. For example, if one carrier corresponds to only one TRP, a corresponding block includes one piece of indication information, and the indication information indicates a PTRS-DMRS association of a PUSCH of a corresponding TRP. If one carrier corresponds to two TRPs, a corresponding block includes two pieces of indication information, and the two pieces of indication information indicate a PTRS-DMRS association of PUSCHs of corresponding TRPs, respectively. |

In this implementation, a technical solution of control information of PUSCHs of multiple TRPs in two-stage DCI is provided, so that flexible dynamic switching between a single-TRP transmission scheme and a multi-TRP transmission scheme can be implemented while blind detection complexity of control channels and overheads of control channels are reduced, and flexible scheduling of multiple TRPs based on different requirements of different services can be implemented, thereby improving communication performance.

In some other implementations of embodiments of this application, that the first-stage control information indicates the scheduling information of the second-stage control information may include: the second-stage control information specifically indicates scheduling information of a first data channel on the first carrier and a transmission manner of the data channels between the S TRPs and the terminal device based on the scheduling information of the first data channel.

In this implementation, it may be understood that the multiple TRPs are considered as one data channel on one carrier, or in other words, different TRPs are considered as one data channel.

For example, for downlink scheduling, multiple TRPs are considered as one PDSCH, or in other words, different TRPs are considered as one PDSCH.

For another example, for uplink scheduling, multiple TRPs are considered as one PUSCH, or in other words, different TRPs are considered as one PUSCH.

In this implementation, in an example, the second-stage control information may include the scheduling information of the data channels, and the scheduling information implicitly indicates a transmission manner of the data channels of the multiple TRPs.

In this implementation, as another example, the second-stage control information may include the scheduling information of the data channels and first indication information, and the first indication information indicates the transmission manner of the data channels of the multiple TRPs.

In this implementation, as still another example, the second-stage control information may include the scheduling information of the data channels and second indication information, the second indication information indicates a part of information of the transmission manner of the data channels of the multiple TRPs, and all or a part of information in the scheduling information indicates the other information of the transmission manner.

In an example, the transmission manner may include at least one of the following information: a quantity of enabled TRPs, a resource multiplexing scheme, or a service type.

In an example, there is one or more enabled TRPs.

In an example, the resource multiplexing scheme includes at least one of the following manners: time domain resource multiplexing, frequency domain resource multiplexing, or antenna port multiplexing.

In an example, the service type may include eMBB and/or ULLRC.

When the data channel is a PDSCH, in an example, the scheduling information includes at least one of the following information: a quantity of TCI states, a quantity of DMRS CDM groups, a quantity of repetitions, an MCS table, an RV version, time domain resource assignment information, or frequency domain resource assignment information.

The quantity of TCI states may be used to determine whether single-TRP transmission or non-coherent joint transmission (non-coherent joint transmission, NCJT) is used. The quantity of DMRS CDM groups may be used to determine whether code division multiplexing is used. The quantity of repetitions may be used to determine whether inter-slot (slot) multi-TRP repetition is used. The MCS table may be used to determine eMBB or URLLC. The quantity of RVs may be used to determine a same RV version or different RV versions. The quantity of time domain resource indication fields may be used to determine whether time division multiplexing is used. The quantity of frequency domain resource indication fields may be used to determine whether frequency division multiplexing is used.

When the scheduling information implicitly indicates the transmission manner, an example of a mapping relationship between a transmission manner and a quantity of TCI states, a quantity of DMRS CDM groups, a quantity of repetitions, an MCS table, an RV version, a quantity of time domain resources, and a quantity of frequency domain resources is shown in Table 3.

**Table 3: Table of a mapping relationship between scheduling information and a transmission manner**

| Quantity of TCI states | Quantity of DMRS CDM groups | Quantity of repetitions | MCS table | Quantity of RVs | Quantity of time domain resources | Quantity of frequency domain resources | Transmission manner |
|---|---|---|---|---|---|---|---|
| 1 | / | / | 0 or 1 | / | / | / | Single TRP (eMBB or URLLC) |
| 2 | 2 | 1 | 0 | 1 | 1 | 1 | eMBB code division multi-TRP |
| 2 | 1 | 1 | 0 | 1 | 1 | 2 | eMBB frequency division multi-TRP |
| 2 | 1 | 1 | 0 | 1 | 2 | 1 | eMBB time division multi-TRP |
| 2 | 2 | 1 | 1 | 1 | 1 | 1 | URLLC code division multi-TRP (1a) |
| 2 | 1 | 1 | 1 | 1 | 1 | 2 | URLLC single-RV frequency division multi-TRP (2a) |
| 2 | 1 | 1 | 1 | 2 | 1 | 2 | URLLC multi-RV frequency division multi-TRP (2b) |
| 2 | 1 | 1 | 1 | 2 | 2 | 1 | URLLC intra-slot time division multi-TRP (3) |
| 2 | 1 | > 1 | 1 | 2 | 2 | 1 | URLLC inter-slot time division multi-TRP (4) |

In the brackets of the transmission manners in Table 3, 1a represents space division repetition (multiplexing); 2a represents frequency division repetition (multiplexing) in a single RV version; 2b represents frequency division repetition (multiplexing) in multiple RV versions; 3 represents time domain repetition (multiplexing) in a slot; and 4 represents time domain repetition (multiplexing) between slots.

The second-stage control information may include scheduling information of a data channel and first indication information. When the first indication information indicates the transmission manner of the data channels of the multiple TRPs, in an example, the transmission manner may include at least one of the following manners: eMBB single-TRP scheduling information, eMBB NCJT scheduling information (a same frequency domain resource), eMBB NCJT scheduling information (different frequency domain resources), eMBB NCJT scheduling information (different time domain resources), URLLC single-TRP scheduling information, URLLC NCJT scheduling information (space division), URLLC NCJT scheduling information (frequency division), URLLC NCJT scheduling information (time division).

In an example, three bits may be used to indicate the eight transmission manners. An example of a mapping relationship between the 3-bit indication information and the eight transmission manners is shown in Table 4.

**Table 4: Table of the mapping relationship between the 3-bit indication information and the eight transmission manners**

| Indication information | Transmission manner |
|---|---|
| 000 | eMBB single TRP |
| 001 | eMBB code division multi-TRP |
| 010 | eMBB frequency division multi-TRP |
| 011 | eMBB time division multi-TRP |
| 100 | URLLC single TRP |
| 101 | URLLC code division multi-TRP |
| 110 | URLLC frequency division multi-TRP |
| 111 | URLLC Time division multi-TRP |

The second-stage control information includes scheduling information of the data channel and second indication information. The second indication information indicates a part of information of the transmission manner of the data channels of the multiple TRPs. When all or a part of the scheduling information indicates the other information of the transmission manner, optionally, eMBB or URLLC may be explicitly indicated using the second indication information, and an NCJT transmission scheme may be implicitly determined. Optionally, code division, frequency division, or time division may be explicitly indicated using the second indication information, and eMBB or URLLC may be implicitly indicated using the scheduling information.

In an implementation in which the second-stage control information indicates the scheduling information and the transmission manner, optionally, an information field in corresponding scheduling information and/or a size of the scheduling information may vary when the transmission manner varies.

In an example, the following information field or size in the scheduling information varies when the transmission manner varies: a quantity of time domain resource information fields, a quantity of frequency domain resource information fields, SRS resource indication information, preamble information, a TPC command, or PTRS-DMRS association information.

It may be understood that eMBB or URLLC may respectively correspond to multi-TPR transmission of different data or same data. Therefore, for large URLLC packets, multi-TRP transmission can also involve different data. In this case, the second-stage control information may further indicate whether same data or different data is transmitted in a multi-TRP transmission manner.

In some implementations of embodiments of this application, the scheduling information may include a common information field and a private information field, the common information field includes common information of the data channels between the S TRPs and the terminal device in the transmission manner, and the private information field includes private information of each of the S TRPs in the transmission manner indicated by the first part of information.

The common information field may include at least one of the following information: an MCS, an NDI, or DMRS sequence initialization.

The private information field may include at least one of the following information: frequency domain resource assignment indication information, time domain resource assignment indication information, an RV version, TPC, an SRS, an antenna port, or a TCI.

In an example, when a transmission manner varies, the common information field and the private information field may vary.

For example, when the transmission manner includes code division, the common information field may include time domain frequency resource assignment indication information and frequency domain resource assignment indication information, and a private information field of each TRP includes an antenna port.

For example, when the transmission manner includes frequency division, the common information field may include time domain resource assignment indication information and an antenna port, and a private information field of each TPR includes frequency domain resource assignment indication information.

For example, when the transmission manner includes time division, the common information field may include frequency domain resource assignment indication information and an antenna port, and a private information field of each TRP includes time domain resource assignment indication information.

When the second-stage control information is used to schedule an uplink data channel, an example of names and sizes of information fields is shown in Table 5.

**Table 5: Table of the example of the names and sizes of the scheduling information fields of the uplink data channel**

| Scheduling information fields of the uplink data channel | Size (unit: bit) |
|---|---|
| Header/Identifier for a DCI format (Header/Identifier for DCI format) | 1 |
| Frequency domain resource assignment (Frequency domain resource assignment) | 7 |
| Time domain resource assignment (Time domain resource assignment) | 0, 1, 2, 3, 4, 5, 6 |
| Frequency hopping flag (Frequency hopping flag) | 0, 1 |
| Modulation and coding scheme (Modulation and coding scheme) | 5 |
| Redundancy version (Redundancy version) | 0, 1, 2 |
| New data indicator (New data indicator) | 1 |
| HARQ process number (HARQ process number) | 0, 1, 2, 3, 4 |
| TPC for a scheduled PUSCH (TPC for scheduled PUSCH) | 2 |
| Downlink assignment index (Downlink assignment index) | 0, 1, 2, 4 |
| Open-loop indicator (Open-loop indicator) | 0, 1, 2 |
| SRS resource indicator (SRS resource indicator) | 0, 1, 2, 3, 4 |
| Precoding information and the number of layers (Precoding information and number of layers) | 0-6 |
| Beta_offset indicator (Beta_offset indicator) | 0, 1, 2 |
| DMRS sequence initialization (DMRS sequence initialization) | 0, 1 |
| Carrier indicator (Carrier indicator) | 0, 1, 2, 3 |
| Bandwidth indicator (Bandwidth part indicator) | 0, 1, 2 |
| Antenna ports (Antenna ports) | 0, 2, 3, 4, 5 |
| SRS request (SRS request) | 0, 1, 2, 3 |
| CSI request (CSI request) | 0-6 |
| CBG transmission information (CBG transmission information (CBGTI)) | 0, 2, 4, 6, 8 |
| PTRS-DMRS association | 0, 2 |
| UL-SCH indicator | 1 |
| UL/SUL indicator | 0, 1 |
| Priority (Priority) | 0, 1 |
| Invalid pattern (Invalid pattern) | 0, 1 |
| CRC | 24 |
| Total | [41 to 97] |

In Table 5, the 2^{nd}, 3^{rd}, 6^{th}, 9^{th}, 12^{th}, 13^{th}, 18^{th}, and 22^{nd} rows may be common information fields, and other rows may be private information fields.

When the second-stage control information is used to schedule a downlink data channel, an example of names and sizes of information fields is shown in Table 6.

**Table 6: Table of the example of the names and sizes of the scheduling information fields of the downlink data channel**

| Scheduling information fields of the downlink data channel | Size (unit: bit) |
|---|---|
| Header/Identifier for a DCI format (Header/Identifier for DCI format) | 1 |
| Frequency domain resource assignment (Frequency domain resource assignment) | 7 |
| Time domain resource assignment (Time domain resource assignment) | 0, 1, 2, 3, 4 |
| VRB-to-PRB mapping (VRB-to-PRB mapping) | 0, 1 |
| Modulation and coding scheme (Modulation and coding scheme) | 5 |
| Redundancy version (Redundancy version) | 0, 1, 2 |
| New data indicator (New data indicator) | 1 |
| HARQ process number (HARQ process number) | 0, 1, 2, 3, 4 |
| TPC for a scheduled PUCCH (TPC for scheduled PUCCH) | 2 |
| Downlink assignment index (Downlink assignment index) | 0, 1, 2, 4 |
| PUCCH resource indicator (PUCCH resource indicator) | 0, 1, 2, 3 |
| PDSCH-to-HARQ timing (PDSCH-to-HARQ timing) | 0, 1, 2, 3 |
| PRB bundling size indicator | 0, 1 |
| Rate matching indicator (Rate matching indicator) | 0, 1, 2 |
| ZP CSI-RS trigger | 0, 1, 2 |
| Carrier indicator (Carrier indicator) | 0, 1, 2, 3 |
| Bandwidth indicator (Bandwidth part indicator) | 0, 1, 2 |
| Antenna port Antenna port(s) | 0, 4, 5, 6 |
| SRS request | 0, 1, 2, 3 |
| Transmission configuration indication | 0, 1, 2, 3 |
| CBG transmission information (CBGTI) | 0, 2, 4, 6, 8 |
| CBG flushing out information (CBGFI) | - |
| DMRS sequence initialization | 0, 1 |
| Priority Priority | 0, 1 |
| CRC | 24 |
| Total | [40 to 85] |

In Table 6, the 2^{nd}, 3^{rd}, 6^{th}, 18^{th}, and 20^{th} rows may be common information fields, and other rows may be private information fields.

When multiple TRPs are considered as one data channel, or in other words, different TRPs are considered as one data channel, an example of the second-stage control information is as follows: The second-stage control information may be one block (block), the block may indicate multiple pieces of scheduling information, each piece of scheduling information corresponds to one TRP, and each piece of scheduling information is used to schedule a data channel of a corresponding TRP.

In an example, the second-stage control information includes a block, and the block includes the following information: frequency domain resource indication information 1, frequency domain resource indication information 2, time domain resource indication information 1, time domain resource indication information 2, a TCI 1, and a second TCI 2.

The frequency domain resource indication information 1, the time domain resource indication information 1, and the TCI 1 are scheduling information of a data channel of the TRP 1. The frequency domain resource indication information 2, the time domain resource indication information 2, and the TCI 2 are scheduling information of a data channel of the TRP 2.

In embodiments of this application, optionally, for eMBB (a multi-TRP transmission scenario in which a capacity requirement is improved), the second-stage control information may indicate an MCS for each CDM group, each TRP, or each TCI, to adapt to a more practical multi-TRP channel characteristics, thereby flexibly scheduling transmission and improving performance.

For example, the second-stage control information may include the following information: MSC1 and MSC2.

The terminal device may calculate a TBS for each CDM group, each TRP, or each TCI in the following manner. In an example, the TBS of the TRP 1 may be calculated in the following manner: a total quantity 1 of available REs * a code rate 1 * a modulation scheme 1 * the number 1 of layers (layer). The TBS of the TRP 2 may be calculated in the following manner: a total quantity 2 of available REs * a code rate 2 * a modulation scheme 2 * the number 2 of layers.

In some implementations of embodiments of this application, new and old data may be jointly transmitted using multiple TRPs, to adapt to more flexible data packet characteristics, thereby flexibly scheduling transmission and improving performance.

In an example, the second-stage control information may include the following information: new data indicator information (New data indicator) 1 and old data indicator information 2. The new data indicator information 1 corresponds to the TRP 1, and the old data indicator information 2 corresponds to the TRP 2.

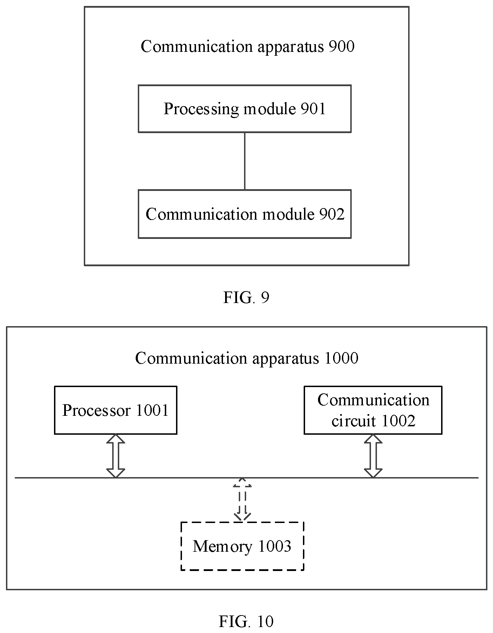

FIG. 9 is a diagram of a structure of a communication apparatus according to an embodiment of this application. As shown in FIG. 9, the apparatus 900 may include a processing module 901 and a communication module 902.

As a first example, the apparatus 900 may be configured to implement the communication method implemented by the network device in any one of the embodiments shown in FIG. 6 to FIG. 8. For example, the processing module 901 is configured to implement processing-related steps performed by the network device in any one of the embodiments shown in FIG. 6 to FIG. 8, and the communication module 902 is configured to implement steps such as sending and/or reception performed by the network device in any one of the embodiments shown in FIG. 6 to FIG. 8.

As a second example, the apparatus 900 may be configured to implement the communication method implemented by the terminal device in any one of the embodiments shown in FIG. 6 to FIG. 8. For example, the processing module 901 is configured to implement processing-related steps performed by the terminal device in any one of the embodiments shown in FIG. 6 to FIG. 8, and the communication module 902 is configured to implement steps such as sending and/or reception performed by the terminal device in any one of the embodiments shown in FIG. 6 to FIG. 8.

FIG. 10 is a diagram of a structure of a communication apparatus according to another embodiment of this application. As shown in FIG. 10, the apparatus 1000 includes a processor 1001 and a communication circuit 1002. The processor 1001 and the communication circuit 1002 are coupled to each other. It may be understood that the communication circuit 1002 may be a transceiver or an input/output interface. Optionally, the apparatus 1000 may further include a memory 1003, configured to store instructions executed by the processor 1001, or store input data required by the processor 1001 to run instructions, or store data generated after the processor 1001 runs instructions. It may be understood that the memory 1003 may be located outside the processor 1001, or may be located inside the processor 1001.

In an example, the processor 1001 is configured to implement the function of the processing module 901, and the communication circuit 1002 is configured to implement the function of the communication module 902.

The apparatus 1000 may be a communication device or may be a chip used in the communication device. For example, the apparatus 1000 may be a terminal device or an apparatus, a module, a circuit, a chip, or the like that is used in the terminal device, or may be a network device or an apparatus, a module, a circuit, a chip, or the like that is used in the network device. It may be understood that when the apparatus 1000 is a terminal device or a network device, the communication circuit 1002 may be a transceiver.

Some embodiments of this application further provide a computer program product. When the computer program product runs on a processor, the method implemented by the terminal device in any one of the foregoing embodiments may be implemented, or the method implemented by the network device in any one of the foregoing method embodiments may be implemented.

Some embodiments of this application further provide a computer-readable storage medium. The computer-readable storage medium includes computer instructions. When the computer instructions run on a processor, the method implemented by the terminal device in any one of the foregoing embodiments may be implemented, or the method implemented by the network device in any one of the foregoing method embodiments may be implemented.

In some embodiments of this application, a communication system is further provided. The system may implement the method implemented by the terminal device and the network device in any one of the foregoing embodiments.

It may be understood that the processor in embodiments of this application may be the following device or all or some circuits configured to process a function in the following device: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a network device, wherein the method comprises:
sending first-stage control information, wherein the first-stage control information indicates scheduling information of second-stage control information, the second-stage control information indicates scheduling information of a data channel between each of S transmission reception points TRPs and a terminal device, and S is an integer greater than 1; and
sending the second-stage control information.

2. The method according to claim 1, wherein the second-stage control information specifically indicates scheduling information of each of M data channels on N carriers, N is a positive integer, M is an integer greater than N, and the data channel between each TRP and the terminal device comprises all or a part of the M data channels.

3. The method according to claim 2, wherein the second-stage control information comprises at least one of the following information: M pieces of frequency domain resource information, M pieces of time domain resource information, M1 pieces of transmission configuration indication TCI state information, M hybrid automatic repeat request HARQ process numbers, or M pieces of transmit power control TCP information, and M1 is a positive integer less than or equal to M; and
the M pieces of frequency domain resource information, the M pieces of time domain resource information, the M HARQ process numbers, and the M pieces of TCP information each one-to-one correspond to the M data channels.

4. The method according to claim 3, wherein the second-stage control information comprises the M1 pieces of TCI state information, M1 is equal to M, and the M1 pieces of TCI state information one-to-one correspond to the M data channels.

5. The method according to claim 3, wherein the second-stage control information comprises the M1 pieces of TCI state information, M1 is equal to S, and the M1 pieces of TCI state information one-to-one correspond to the S TRPs; and
the second-stage control information further comprises a quantity of data channels between at least one of the S TRPs and the terminal device.

6. The method according to any one of claims 3 to 5, wherein the data channel is a physical downlink shared channel PDSCH.

7. The method according to claim 2, wherein the second-stage control information comprises at least one of the following information: M pieces of frequency domain resource information, M pieces of time domain resource information, M2 pieces of channel sounding reference signal resource indication SRI information, M3 pieces of preamble information, M4 pieces of phase tracking reference signal PTRS-demodulation reference signal DMRS association information, M HARQ process numbers, or M pieces of TPC information, M2 is a positive integer less than or equal to M, M3 is a positive integer less than or equal to M, and M4 is a positive integer less than or equal to M; and
the M pieces of frequency domain resource information, the M pieces of time domain resource information, the M HARQ process numbers, and the M pieces of TCP information each one-to-one correspond to the M data channels, the M2 pieces of TCI state information one-to-one correspond to M2 data channels in the M data channels, the M3 pieces of SRI state information one-to-one correspond to M3 data channels in the M data channels, and the M4 pieces of PTRS-DMRS association information one-to-one correspond to M4 data channels in the M data channels.

8. The method according to claim 7, wherein the second-stage control information comprises the M2 pieces of SRI state information, M2 is equal to M, and the M2 pieces of SRI state information one-to-one correspond to the M data channels.

9. The method according to claim 7, wherein the second-stage control information comprises the M2 pieces of SRI state information, M2 is equal to S, and the M2 pieces of SRI state information one-to-one correspond to the S TRPs; and
the second-stage control information further comprises a quantity of data channels between at least one of the S TRPs and the terminal device.

10. The method according to any one of claims 7 to 9, wherein the data channel is a physical uplink shared channel PUSCH.

11. The method according to claim 1, wherein the second-stage control information specifically indicates scheduling information of a first data channel on a first carrier and a transmission manner of the data channels between the S TRPs and the terminal device based on the scheduling information of the first data channel.

12. The method according to claim 11, wherein the second-stage control information comprises the scheduling information, a first part of information in the scheduling information indicates the transmission manner, and the first part of information comprises at least one of the following information: a quantity of TCI states, a quantity of DMRS CDM groups, a quantity of repetitions, an MCS table, an RV version, the time domain resource assignment information, or the frequency domain resource assignment information.

13. The method according to claim 11, wherein the second-stage control information comprises the scheduling information and first indication information, and the first indication information indicates the transmission manner.

14. The method according to claim 11, wherein the second-stage control information comprises the scheduling information and second indication information, the second indication information indicates a first part of information in the transmission manner, and a second part of information in the scheduling information indicates a second part of information in the transmission manner.

15. The method according to any one of claims 11 to 14, wherein the scheduling information comprises a common information field and a private information field, the common information field comprises common information of the data channels between the S TRPs and the terminal device in the transmission manner, and the private information field comprises private information of each of the S TRPs in the transmission manner indicated by the first part of information.

16. The method according to claim 15, wherein when the transmission manner varies, information comprised in the common information field and information comprised in the private information field vary.

17. A communication apparatus, comprising a functional module configured to implement the method according to any one of claims 1 to 16.

18. A communication apparatus, comprising a memory and a processor, wherein
the memory is configured to store program instructions; and
the processor is configured to execute the program instructions in the memory to implement the method according to any one of claims 1 to 16.

19. A computer-readable storage medium, wherein the computer-readable storage medium stores program code to be executed by a computer, and the program code comprises instructions used to implement the method according to any one of claims 1 to 16.
